Europäisches Patentamt

European Patent Office

Office européen des brevets

(11) Numéro de publication: **0 236 168 B1**

## FASCICULE DE BREVET EUROPEEN

(45) Date de publication de fascicule du brevet:
**25.09.91**

(51) Int. Cl.5: **G02F 1/133, G09G 3/36**

(21) Numéro de dépôt: **87400161.3**

(22) Date de dépôt: **23.01.87**

(54) **Ecran d'affichage à matrice active et procédés de réalisation de cet écran.**

(30) Priorité: **27.01.86 FR 8601084**

(43) Date de publication de la demande:
**09.09.87 Bulletin 87/37**

(45) Mention de la délivrance du brevet:
**25.09.91 Bulletin 91/39**

(84) Etats contractants désignés:
**BE CH DE GB IT LI NL SE**

(56) Documents cités:
**EP-A- 0 103 523**
**EP-A- 0 145 520**

(73) Titulaire: **Maurice, François**
**125 Boulevard de la Corniche**
**F-22700 Perros-Guirec(FR)**

(72) Inventeur: **Maurice, François**
**125 Boulevard de la Corniche**
**F-22700 Perros-Guirec(FR)**

(74) Mandataire: **Mongrédien, André et al**
**c/o BREVATOME 25, rue de Ponthieu**
**F-75008 Paris(FR)**

## Description

La présente invention a pour objet un écran d'affichage à matrice active et des procédés de réalisation de cet écran.

D'une façon générale, un écran d'affichage à matrice active est constitué de points d'image (appelés encore "pixels" ou "eldims") rangés sous forme matricielle et situés aux croisements de lignes et de colonnes d'adressage. Chaque point d'image comprend un transistor en couches minces (TCM en abrégé) et un condensateur. Les armatures de ce condensateur sont constituées par un pavé conducteur disposé sur l'une des plaques de la cellule et par une contre électrode disposée sur l'autre plaque de la cellule.

La demande de brevet français FR-A-2 533 072 décrit un dispositif de ce genre. Sur l'une des plaques de l'écran sont déposés des pavés conducteurs transparents reliés chacun à un appendice et formant chacun une des armatures du condensateur. Sur cette plaque sont également déposées des lignes et des colonnes conductrices. Les lignes passent au-dessus des appendices des pavés et croisent les colonnes conductrices. Les zones de recouvrement d'une ligne respectivement avec une colonne et un appendice, définissent la source et le drain d'un TCM. La grille de ce transistor est constituée par la partie de la ligne qui est située entre l'appendice et le conducteur colonne.

Sur l'autre plaque de l'écran est déposé un matériau conducteur transparent formant l'autre armature des condensateurs.

L'inconvénient de ce genre de dispositif est qu'à chaque croisement d'une ligne et d'une colonne, il faut assurer un isolement électrique entre les conducteurs. Or, ceci constitue un problème technologique difficile. Des courts-circuits peuvent se produire à ces croisements, qui rendent en partie inutilisable l'écran d'affichage.

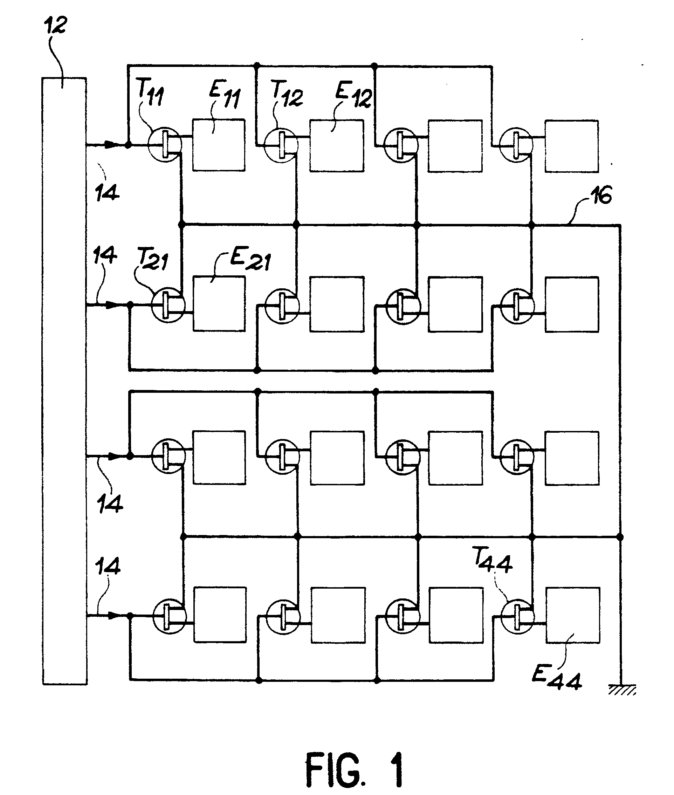

Pour résoudre ce problème, la demande de brevet français FR-A-2 553 218 propose un écran d'affichage à matrice active sans croisement des lignes et des colonnes d'adressage, grâce à une disposition qui est représentée sur la figure 1. L'une des deux plaques de l'écran d'affichage est constituée d'une matrice de pavés conducteurs $E_{11}$, $E_{12}$,..., de transistors $T_{11}$, $T_{12}$, etc..., de lignes de commande 14 et de lignes de référence 16. Les grilles de tous les transistors d'une même ligne sont reliées à une même ligne 14. Un circuit 12 commande séquentiellement les lignes. La source de chaque transistor est reliée aux lignes de référence portées à un potentiel de référence constant Vs. La seconde plaque de l'écran d'affichage (non représentée sur la figure), porte des conducteurs disposés en colonnes et recevant une tension vidéo de commande. Ces conducteurs colonnes comprennent des pavés conducteurs disposés en regard des pavés portés par la première plaque. Un point image ou pixel est alors défini par la zone de recouvrement de deux pavés conducteurs situés en regard l'un de l'autre.

Dans un tel écran d'affichage, les courts-circuits entre lignes et colonnes d'adressage se trouvent bien supprimés, puisque ces lignes et ces colonnes se trouvent sur deux plaques différentes, séparées l'une de l'autre par le cristal liquide.

Néanmoins, il subsiste encore des risques de court-circuit dans le TCM, ce qui peut endommager une ligne de points d'image. En effet, en se référant à la figure 1, on voit que lors d'un court-circuit entre la grille et la source d'un transistor, toute une ligne sera portée au potentiel Vs, ce qui rend défectueuse une ligne entière de pixels.

La présente invention a justement pour but de remédier à cet inconvénient. A cette fin, elle préconise de relier la source d'un transistor, dont la grille est reliée à une certaine ligne, à la ligne suivante, et ceci par une résistance.

Dans ces conditions, la ligne de référence de l'art antérieur se trouve supprimée et il n'existe plus qu'une ligne de commande par ligne de pixels. Par ailleurs, si un transistor se trouve être en court-circuit, il ne gêne en rien le fonctionnement des autres transistors.

De toute façon, les caractéristiques et avantages de l'invention apparaîtront mieux à la lumière de la description qui va suivre, d'exemples de réalisation donnés à titre explicatif et nullement limitatif. Cette description se réfère à des dessins annexés sur lesquels :

- la figure 1, déjà décrite, représente un écran d'affichage matrice active selon l'art antérieur,
- les figures 2a et 2b représentent, de manière schématique, un écran d'affichage selon l'invention,
- la figure 3 représente un schéma électrique équivalent,
- la figure 4 représente une suite de tensions apparaissant en divers points de l'écran,
- la figure 5 représente un mode particulier de réalisation de l'invention,
- la figure 6 représente un schéma équivalent correspondant au mode de réalisation de la figure précédente,
- la figure 7 montre un détail de l'écran dans une première variante,
- la figure 8 montre, en coupe, la structure de la première plaque en divers endroits,
- la figure 9 montre encore deux variantes de réalisation des transistors,
- la figure 10 montre l'allure générale des deux plaques d'un écran conforme à l'invention,
- la figure 11 montre un arrangement particulier des points d'affichage, dans le cas d'affichage en couleur.

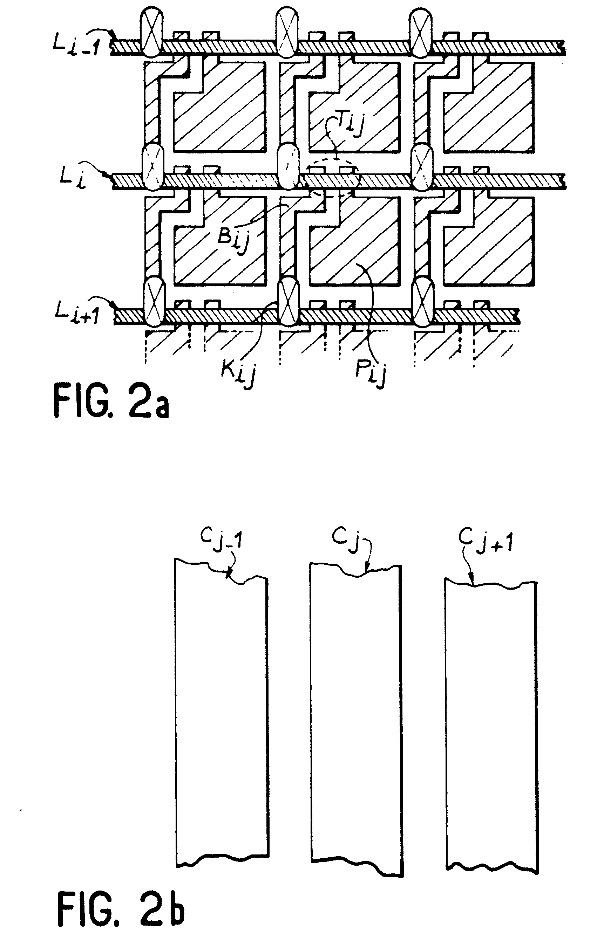

Sur la figure 2a, on voit un pavé conducteur Pij échancré et muni d'un appendice rectangulaire dans la partie supérieure, une bande conductrice Bij épousant la forme de l'échancrure, longeant le pavé et se terminant à la hauteur de l'appendice, et diverses lignes d'adressage Li-1, Li, Li + 1. La ligne Li chevauche l'extrémité supérieure de la bande Bij et l'appendice lié au pavé. Cette ligne forme, dans cette zone de recouvrement, un transistor en couches minces Tij. On voit enfin un pont conducteur Kij qui relie l'extrémité inférieure de la bande Bij à la ligne Li + 1.

Sur la figure 2b, on voit des colonnes Cj-1, Cj, Cj + 1 qui, lorsque les deux plaques sont superposées, recouvrent les colonnes de pavés.

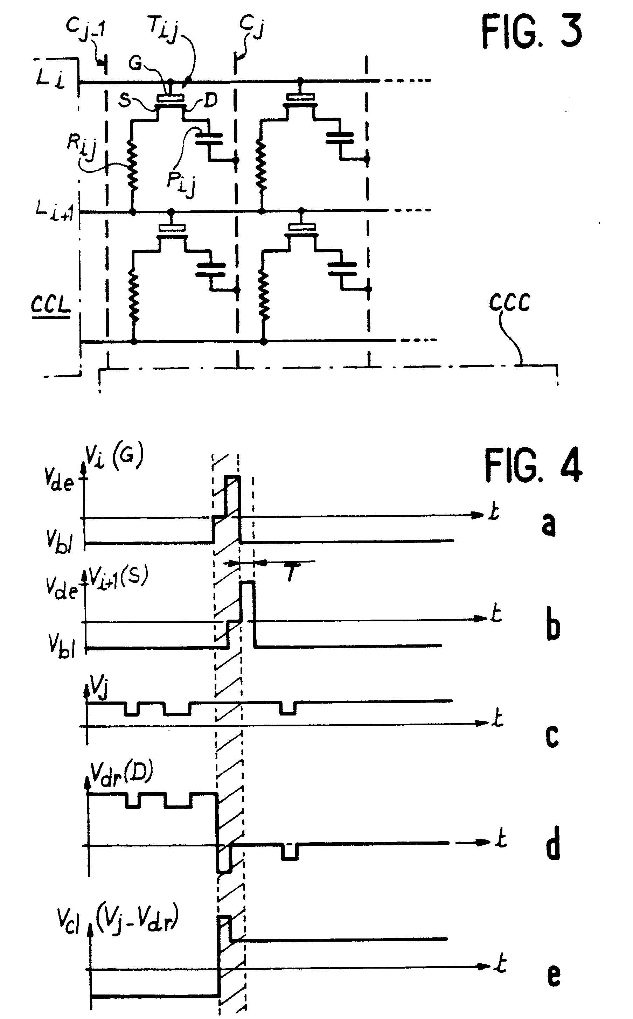

La figure 3 représente un schéma électrique équivalent correspondant au dispositif des figures 2a et 2b. Le transistor Tij comprend une grille G, un drain D et une source S. La grille est reliée à la ligne Li, le drain à l'armature constituée par le pavé Pij, l'autre armature étant reliée à la colonne Cj. La source est reliée à la ligne Li + 1 par une résistance Rij. Par ailleurs, les lignes Li sont reliées à un circuit de commande lignes CCL et les colonnes Cj à un circuit de commande colonnes CCC.

Avec une telle structure, si un transistor présente un court-circuit grille-source, la résistance Rij évite tout court-circuit entre les lignes Li et Li + 1. Un court-circuit grille-drain ne met pas non plus en court-circuit la ligne et la colonne à cause de l'isolement galvanique procuré par le condensateur d'affichage ; enfin, un court-circuit ligne-colonne est impossible car ces lignes et ces colonnes sont physiquement séparées puisqu'appartenant à deux plaques différentes.

Avec une telle structure, la tension appliquée à la ligne Li + 1 doit être liée à la tension appliquée à la ligne Li, pour que le transistor Tij soit correctement alimenté pendant l'affichage de tous les éléments d'image de la ligne Li. Un exemple de tension de commande est représenté sur la figure 4. Ces tensions correspondent au cas particulier où le transistor est en silicium amorphe à canal n, ce qui correspond à une tension de seuil positive. Sur la ligne a, on voit la tension appliquée sur la ligne Li, c'est-à-dire, en définitive, sur les grilles G des transistors reliés à cette ligne. Cette tension est d'abord négative et égale à une valeur Vbl, puis égale à 0, puis égale à une tension positive Vde, puis elle revient à la valeur Vbl. La tension appliquée à la ligne suivante Li + 1 présente la même forme mais est décalée d'une période T égale à la durée totale de commande de l'écran divisée par le nombre de lignes. Cette tension est celle des sources des transistors reliées à la ligne Li + 1.

Tant que la source et la grille du transistor sont au même potentiel et que ce potentiel est inférieur à la tension de drain, le transistor est bloqué. Lorsque la tension de grille devient supérieure à la tension de source, le transistor devient passant. C'est ce qui est schématisé sur la figure 4 par la colonne hachurée. Lorsque le transistor est bloqué, le drain est isolé et son potentiel suit le potentiel de la colonne associée. La tension appliquée à la colonne Vj est représentée sur la ligne c et le potentiel de drain sur la ligne d. Lorsque le transistor est passant, le potentiel de drain devient égal au potentiel de source. Pour connaître l'excitation appliquée au cristal liquide, il faut déterminer la différence de potentiel des deux armatures du condensateur, c'est-à-dire, en définitive, la différence entre le potentiel de la colonne Vj et le potentiel du drain Vdr. C'est ce qui est représenté sur la dernière ligne e sous forme de la tension Vcl. On voit que cette tension est établie en permanence sur le point commandé correspondant à la ligne Li et à la colonne Cj et qu'en outre, cette tension est de polarité alternée, tantôt négative (pour une trame), tantôt positive (pour la trame suivante). Cette disposition est habituelle dans les écrans d'affichage à cristaux liquides. Elle est destinée à éviter des effets parasites d'accumulation de charge qui seraient préjudiciables au cristal liquide.

Pour que la résistance qui relie la source à la ligne ne perturbe pas le fonctionnement des circuits de commande, il faut que cette résistance soit très supérieure à l'impédance de sortie desdits circuits. Par ailleurs, pour que cette résistance ne modifie pas trop le comportement du transistor, il faut qu'elle soit très inférieure à la résistance du transistor lorsque celui-ci est passant. Des exemples de résistances seront donnés plus loin.

On peut imaginer des tensions de lignes plus complexes que celles qui sont représentées sur la figure 4 pour éviter de mettre en danger le transistor. En effet, si Vmax est la valeur absolue de la plus grande tension Vcl, on peut montrer que le potentiel de drain Vdr prend ses valeurs sur une plage de largeur 4 Vmax. La tension Vmax pouvant atteindre 7 V, la tension Vdr pourrait donc atteindre environ 30 V, ce qui est considérable. On peut alors imaginer des tensions de ligne plus sophistiquées, à plus de trois niveaux (par exemple 4 ou 6), qui limitent cette valeur.

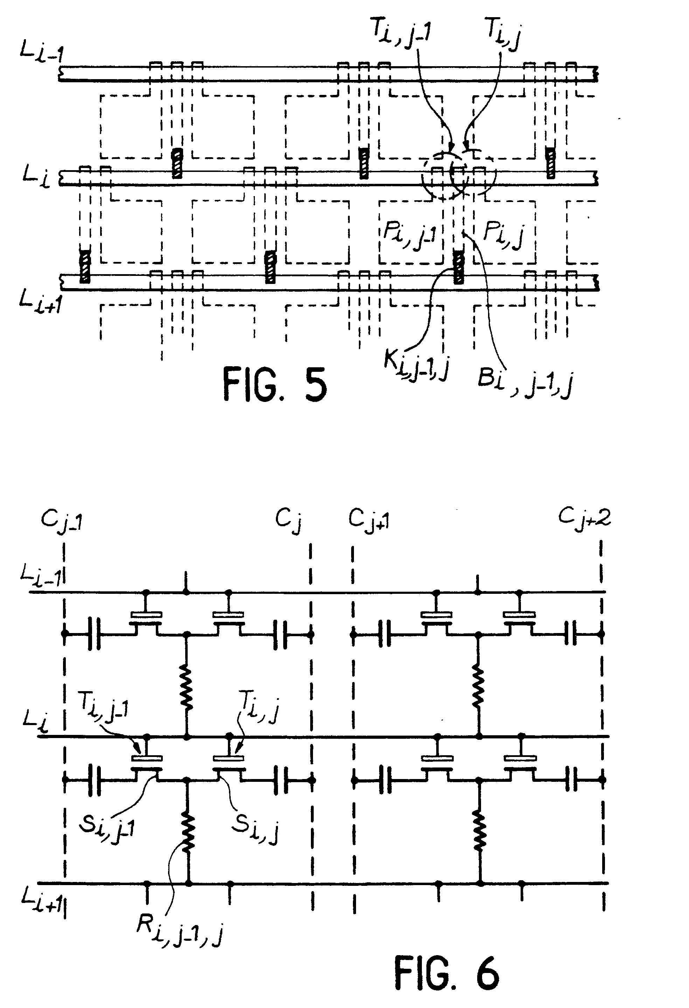

Sur la figure 5, on voit une variante de réalisation dans laquelle les transistors et les pavés sont montés de manière symétrique, deux à deux. Plus précisément, les pavés Pi,j et Pi,j-1 sont tournés de telle sorte que leurs appendices soient situés dans le coin supérieur gauche pour le premier et dans le coin supérieur droit pour le second. Les transistors Ti,j-1 et Ti,j ont alors une source commune, qui est reliée à la ligne Li + 1 par une bande résistive unique Bi,j-1,j et un pont unique Ki,j-1,j.

Le schéma électrique équivalent est représenté sur la figure 6. Les deux transistors Ti,j-1 et Ti,j ont leurs sources respectives Si,j-1 et Si,j reliées entre elles et à la résistance Ri,j-1,j.

Pour réaliser les structures qui viennent d'être décrites, on peut mettre en oeuvre un procédé à trois niveaux de masquage et s'y prendre comme suit :

- tout d'abord, dépôt sur un substrat isolant (en verre par exemple) d'une couche conductrice transparente (par exemple en oxyde d'indium-étain ou ITO),
- première photogravure de cette couche pour définir les pavés conducteurs Pij munis de leur appendice et les bandes conductrices Bij longeant chaque pavé et chaque appendice,
- dépôt d'un empilement formé d'une couche de silicium amorphe hydrogéné, d'une couche d'isolant et d'une couche métallique,
- deuxième photogravure appliquée à l'empilement précédent pour former les lignes d'adressage Li chevauchant l'une des extrémités des bandes conductrices Bi,j et les appendices des pavés, les transistors Ti,j étant constitués dans ces zones de chevauchement,
- dépôt d'une couche métallique et troisième photogravure appliquée à cette couche pour laisser subsister les ponts conducteurs Ki,j établissant la connexion entre l'autre extrémité des bandes conductrices Bi,j et la ligne Li + 1.

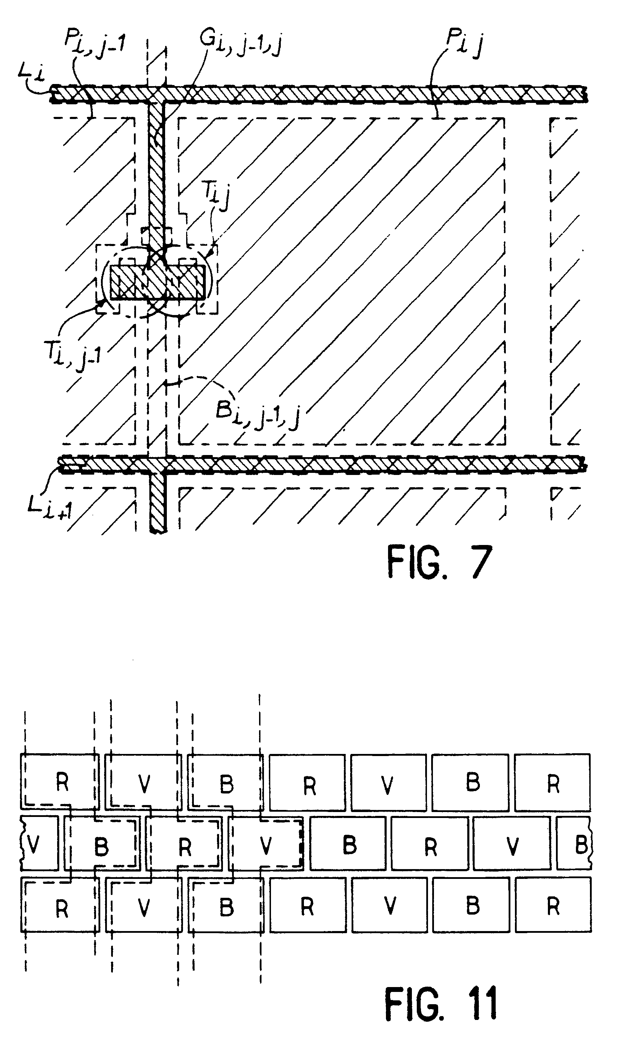

Dans les variantes qui viennent d'être illustrées les appendices reliés aux pavés sont situés à la partie supérieure de ceux-ci, de sorte que c'est la ligne d'adressage elle-même qui, chevauchant ces appendices, forme les diverses grilles des transistors. Mais ces appendices peuvent être situés aussi bien sur les parties latérales des pavés, que dans la partie médiane de ceux-ci. Dans ce cas, il est nécessaire de former une bande supplémentaire destinée à relier la ligne à la grille des transistors. C'est ce qui est représenté sur la figure 7. On y voit deux pavés Pi,j et Pi,j-1 possédant deux appendices latéraux, et une bande Gi,j-1,j que l'on peut qualifier de "descendante", en ce sens qu'elle part de la ligne Li située au-dessus des pavés, descend entre deux pavés et se termine par une extrémité élargie qui recouvre les appendices latéraux. La bande Bi,j-1,j peut être qualifiée de "montante" car elle part de la ligne Li + 1 qui passe sous les pavés et monte entre les pavés pour se terminer sous la grille commune des transistors.

Cette structure présente un certain nombre d'avantages dont le premier est qu'elle peut être obtenue par un procédé à deux niveaux de masquage (au lieu de trois comme dans les variantes précédentes). Ces deux niveaux apparaissent sur la figure 7 grâce à la convention suivante : les zones dessinées en tirets et hachurées à 45° à l'aide de hachures allant du haut à droite en bas à gauche correspondent au premier niveau de masquage (pavés, appendices, bandes montantes, et lignes) ; les zones dessinées en trait plein et hachurées à 45° avec des hachures allant du haut à gauche en bas à droite correspondent au second niveau de masquage (bandes descendantes et lignes).

Pour réaliser une telle structure, on peut s'y prendre de la manière suivante :

- tout d'abord, dépôt sur un substrat isolant (verre par exemple) d'une couche conductrice transparente (en ITO par exemple) et d'une couche d'un premier métal (par exemple en aluminium),
- première photogravure définissant les pavés Pi,j les lignes d'adressage Li et les bandes conductrices montantes Bi,j-1,j,
- dépôt d'un empilement formé d'une couche de silicium amorphe hydrogéné, d'un isolant (par exemple SiO₂ ou Si3N4) et d'un second métal (par exemple de l'aluminium), la couche de silicium amorphe hydrogéné et la couche d'isolant s'interrompant en bout de ligne avant la couche de second métal,
- seconde photogravure appliquée à cet empilement pour laisser subsister cet empilement sur les lignes et sous forme de bandes descendantes Gi,j-1,j partant d'une ligne et chevauchant la seconde extrémité de la bande conductrice montante, et les appendices des pavés, cette seconde photogravure dégageant la couche conductrice transparente des pavés et de partie médiane des bandes Bi, J-1, J.

Avec un tel procédé, on aboutit à des lignes d'adressage qui comprennent une couche conductrice transparente et deux couches métalliques superposées en contact l'une avec l'autre en bout de ligne. Cette structure, redondante, permet de réduire considérablement les risques de coupure de lignes. En effet, même s'il existe une coupure d'une des couches métalliques, l'une ou l'autre des deux autres couches assurera un état équipotentiel à toute la ligne.

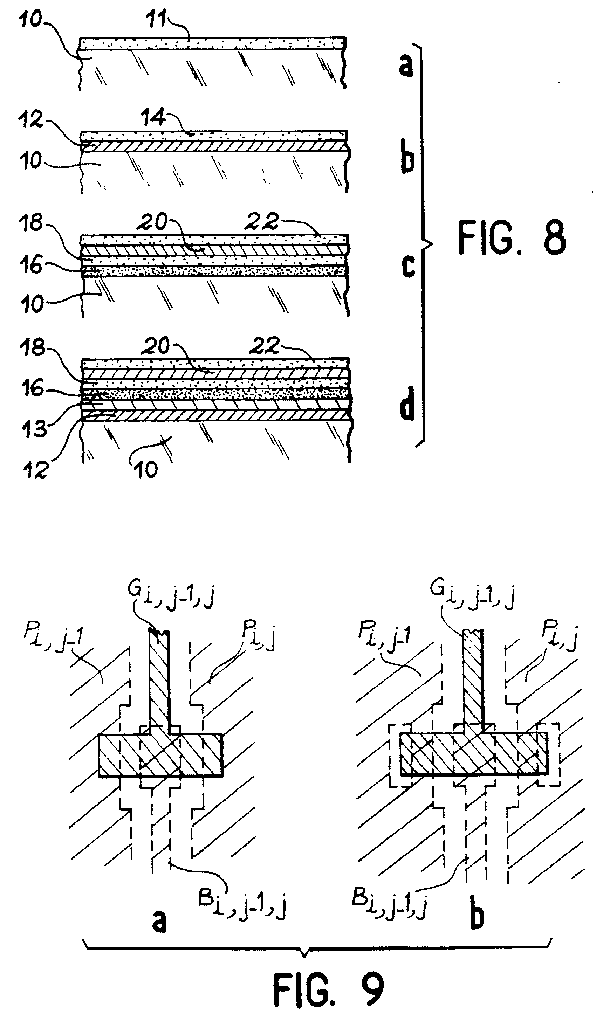

La figure 8 permet de préciser encore cette structure. Il s'agit de coupes faites en diverses zones de la première plaque. La coupe a correspond aux zones où il n'y a aucun dépôt conducteur, c'est-à-dire entre les lignes et les pavés ; on y voit un substrat 10 recouvert d'une couche de passivation 11. La coupe b est faite au-dessus des pavés : elle montre le substrat 10, une couche 12 en ITO et une couche de passivation 14 (par exemple en SiO₂). La coupe c est faite dans la zone du canal des transistors : elle montre le substrat 10, une couche 16 de aSi:H,une couche 18 d'isolant de grille, par exemple en $SiO_2$, une couche 20 métallique (en aluminium par exemple) et enfin une couche 22 de passivation (en $SiO_2$). La coupe d enfin est faite le long d'une ligne d'adressage : elle montre le substrat 10, la couche 12 d'ITO, une couche du premier métal 13, la couche 16 de aSi:H, la couche isolante 18 (en $SiO_2$), la couche 20 en second métal et la couche de passivation 22.

La figure 9 montre encore deux variantes de réalisation des transistors. Sur la partie a on se prémunit contre les désalignements des masques dans le sens vertical en donnant à la bande montante Bi,j-1,j une extrémité rectangulaire de largeur supérieure à la largeur de la bande descendante. Sur la partie b on se prémunit, en outre, contre les désalignements dans le sens horizontal, en dégageant une ouverture dans les pavés.

On évite ainsi l'apparition de transistors parasites qui résulteraient de débordements de la bande descendante par rapport à la bande montante.

On observera que, dans les modes de réalisation qui viennent d'être décrits en liaison avec les figures 7 et 9, il existe un transistor parasite s'étendant entre la zone médiane où l'on trouve les deux transistors à source commune et la ligne supérieure Li. Mais un tel transistor présente un rapport $\frac{W}{L}$ de la largeur à la longueur très petit, de l'ordre de 0,1, ce qui le rend pratiquement inoffensif.

Dans tous les modes de réalisation qui viennent d'être décrits, la résistance reliant la source des transistors à la ligne suivante est constituée par la première couche conductrice déposée, qui est par exemple en ITO. Cette couche peut présenter une valeur supérieure à 10 kΩ par carré, et par exemple 20 kΩ par carré. La bande peut avoir une longueur égale à 10 fois sa largeur, ce qui correspond à 10 carrés, soit une résistance totale de 200 kΩ.

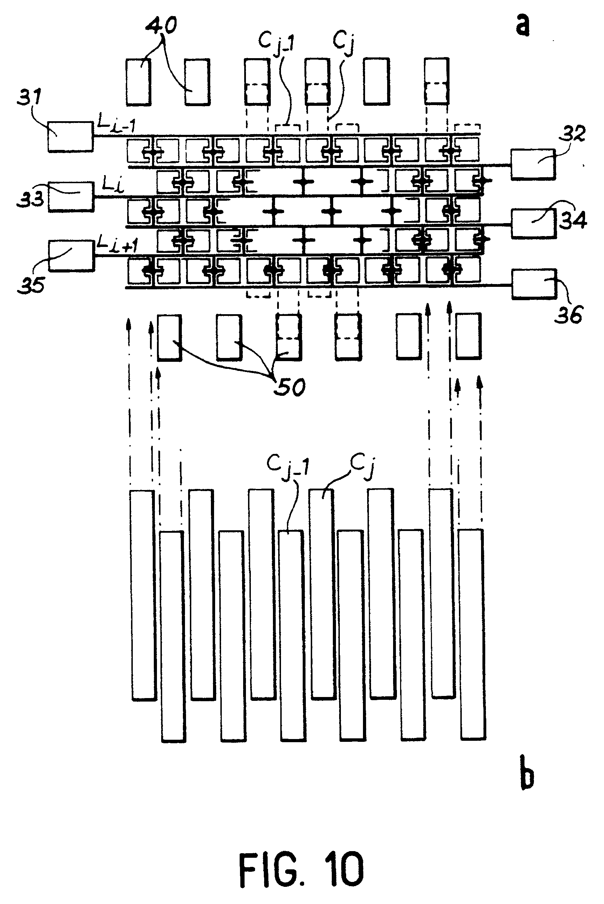

La figure 10, partie a, représente une plaque inférieure conforme aux dernières variantes illustrées (une partie seulement des points d'affichage sont représentés par souci de simplification). Les lignes impaires sont reliées à des plots de connexion 31, 33, 35, etc... situés à gauche de la zone d'affichage et les lignes paires à des plots 32, 34, 36, etc... situés à droite de cette zone. Les plots 40 situés en haut et 50 situés en bas de la zone d'affichage servent au report des connexions des colonnes. Celles-ci sont illustrées sur la partie b de la figure 10. Elles sont constituées, comme les pavés, par un conducteur transparent, par exemple en ITO à 100Ω par carré.

L'invention qui vient d'être décrite peut être combinée avec une autre disposition qui fait l'objet d'une autre demande de brevet au nom du même inventeur, et déposée à la même date que la présente demande, et qui préconise de relier les lignes entre elles par des résistances appropriées EP-A-0 236 167. De cette manière, si une ligne est coupée, la partie isolée de la ligne n'est pas flottante mais portée à un potentiel égal à la demi-somme des potentiels des lignes adjacentes auxquelles elle est reliée.

Pour terminer, il faut souligner que la position des éléments d'affichage n'est pas nécessairement la même d'une ligne à la suivante. On peut décaler ces éléments d'un demi-pas, comme illustré sur la figure 11. Les éléments peuvent correspondre alors à l'affichage de trois couleurs primaires, rouge (R), vert (V) et bleu (B). Naturellement, les colonnes doivent épouser cette disposition en quinconce et présenter des décrochements appropriés d'une demi-période, comme représenté en tirets sur la figure 11.

## Revendications

1. Ecran d'affichage à matrice active comprenant une première plaque sur laquelle sont déposés des pavés conducteurs (Pij), des transistors de commande (Tij) ayant un drain (D), une grille (G) et une source (S) et des lignes conductrices d'adressage (Li) aptes à être relies à un circuit de commande ligne (CCL), les grilles (G) des transistors (Tij) étant reliées aux lignes (Li) et les drains (D) aux pavés (Pij), une seconde plaque comprenant des colonnes conductrices d'adressage (Cj) recouvrant les pavés (Pij) de la première plaque, et un cristal liquide inséré entre les deux plaques, cet écran étant caractérisé par le fait que la source (S) d'un transistor (Tij) dont la grille (G) est reliée à une ligne (Li) de rang i est reliée à la ligne suivante (Li + 1) de rang i + 1 par une résistance (Rij), la résistance (Rij) ayant une valeur très supérieure à l'impédance de sortie des circuits de commande lignes (CCL) et très inférieure à la résistance des transistors (Tij) lorsqu'ils sont passants.

2. Ecran d'affichage selon la revendication 1, caractérisé par le fait que la résistance qui relie une source d'un transistor à une ligne est constituée par une bande (Bij) de matériau conducteur déposée sur la première plaque et s'étendant le long d'un pavé.

3. Ecran d'affichage selon la revendication 1, caractérisé par le fait que les pavés (Pij) et les transistors (Tij) sont disposés symétriquement deux à deux, deux transistors symétriques (Ti, j-1, Ti,j) ayant une source commune, une seule bande conductrice (Bi, j-1, j) reliant cette source commune à la ligne correspondante (Li + 1) et s'étendant entre deux pavés symétriques.

4. Ecran selon la revendication 3, caractérisé par le fait que les transistors (Ti, j-1 et Ti,j associés à deux pavés symétriques sont disposés entre ces deux pavés, dans leur partie médiane, les grilles des deux transistors étant reliées à la ligne (Li) de rang i par une première bande conductrice (Gij) s'étendant entre les deux pavés et la source commune de ces deux transistors étant reliée à la ligne (Li + 1) de rang i + 1 par une seconde bande (Bij) s'étendant entre les deux pavés.

5. Procédé de réalisation d'un écran d'affichage conforme à la revendication 1, dans lequel pour réaliser la première plaque, on effectue les opérations suivantes :
- dépôt sur un substrat isolant (10) d'une couche conductrice transparente (12),
- première photogravure de cette couche définissant des pavés conducteurs (Pij) munis d'un appendice,
- dépôt d'un empilement formé d'une couche de silicium amorphe hydrogéné (16), d'une couche d'isolant (18) et d'une couche métallique (20),
- deuxième photogravure appliquée à l'empilement précédent pour former des lignes chevauchant les appendices des transistors étant constitués dans ces zones de chevauchement,
ce procédé étant caractérisé par le fait que :
- la première photogravure définit en outre des bandes conductrices (Bij) longeant chaque pavé et chaque appendice,
- la deuxième photogravure forme des lignes chevauchant l'une des extrémités des bandes conductrices,
- on dépose une couche métallique et on effectue une troisième photogravure appliquée à cette couche laissant subsister des ponts conducteurs (Kij) établissant une connexion entre l'autre extrémité des bandes conductrices (Bij) et la ligne adjacente (Li + 1).

6. Procédé de réalisation d'un écran d'affichage conforme à la revendication 1, dans lequel pour réaliser la première plaque on effectue les opérations suivantes :
- dépôt sur un substrat isolant (10) d'une couche conductrice transparente (12),
- première photogravure définissant des pavés (Pij), des lignes d'adressage (Li),
- dépôt d'un empilement formé d'une couche de silicium amorphe hydrogéné (16), d'un isolant (18) et d'un second métal (20),
- seconde photogravure de cet empilement laissant subsister cet empilement sur les lignes et sous forme,
ce procédé étant caractérisé par le fait que :
- après dépôt sur le substrat (10) de la couche conductrice transparente (12), on dépose une couche d'un premier métal (13),
- la première photogravure définit en outre des bandes conductrices (Bij) longeant chaque pavé, ces bandes étant reliées à une première extrémité à une des lignes (Li + 1),
- dans le dépôt de l'empilement, la couche de silicium amorphe hydrogéné (16) et la couche d'isolant (18) s'interrompent en bout de ligne avant la couche de second métal, de sorte que celle-ci vient en contact avec la couche du premier métal,
- la seconde photogravure forme en outre des bandes de connexion (Gij) partant d'une ligne (Li) et chevauchant la seconde extrémité de la bande conductrice (Bij) et l'appendice des pavés, cette seconde photogravure dégageant la couche conductrice transparente des pavés et de la partie médiane des bandes (Bij), chaque ligne comprenant ainsi une couche conductrice transparente et deux couches métalliques superposés et en contact l'une avec l'autre en bout de ligne.

## Claims

1. Active matrix display screen having a first plate on which are deposited conductive blocks (Pij), control transistors (Tij) having a drain (D), a gate (G) and a source (S) and conductive addressing lines (Li) which can be connected to a line control circuit (CCL), the gates (G) of the transistors (Tij) being connected to the lines (Li) and the drains (D) to the blocks (Pij), a second plate having conductive addressing columns (Cj) covering the blocks (Pij) of the first plate and a liquid crystal inserted between the two plates, said screen being characterized in that the source (S) of a transistor (Tij), whose gate (G) is connected to a line (Li) of rank i is connected to the following line (Li + 1) of rank i + 1 by a resistor (Rij); the latter having a value well above the output impedance of the line control circuits (CCL) and well below the resistance of the transistors (Tij) when they are conductive.

2. Display screen according to claim 1, characterized in that the resistor connecting a source of a transistor to a line is constituted by a conductive material strip (Bij) deposited on the first plate and extending along a block.

3. Display screen according to claim 1, charactered in that the blocks (Pij) and the transistors (Ti)) are arranged symmetrically pairwise, two symmetrical transistors (Ti, j-1, Ti,j) having a common source, a single conductive strip (Bi, j-1, j) connecting said common source to the corresponding line (Li + 1) and extending between two symmetrical blocks.

4. Screen according to claim 3, characterized in that the transistors (Ti, j-1 and Ti,j) associated with two symmetrical blocks are located between these two blocks in their median portion, the gates of the two transistors being connected to the line (Li) of rank i by a first conductive strip (Gij) atending between the two blocks and the common source of these two transistors is connected to the line (Li + 1) of rank i + 1 by a second strip (Bij) extending between the two blocks.

5. Process for the production of a display screen according to claim 1, in which for producing the first plate the following operations are carried out:
deposition of a transparent conductive layer (12) on an insulating substrate (10),
first photoetching of said layer defining conductive blocks (Pij) provided with an appendix,
deposition of a stack formed by a hydrogenated amorphous silicon layer (16), an insulating layer (18) and a metal layer (20),
second photoetching applied to the preceding stack to form lines overlapping the appendixes of the transistors being constituted in the said overlap zones,
said process being characterized in that:
the first photoetching also defines conductive strips (Bij) passing along each block and each appendix,
the second photoetching forms lines overlapping one of the ends of the conductive strips,
a metal layer is deposited and a third photoetching is carried out being applied to said layer, so as to leave behind conductive bridges (Kij) establishing a connection between the other end of the conductive strips (Bij) and the adjacent line (Li + 1).

6. Process for the production of a display screen according to claim 1 in which for producing the first plate the following operations are carried out:
deposition on an insulating substrate (10) of a transparent conductive layer (12),

first photoetching defining blocks (Pij) of addressing lines (Li),
deposition of a stack formed by a hydrogenated amorphous silicon layer (16), an insulant (18) and a second metal (20),
second photoetching of said stack leaving behind said stack on the lines,
said process being characterized in that:
following the deposition on the substrate (10) of the transparent conductive layer (13), a layer of a first metal (13) is deposited,
the first photoetching also defines conductive strips (Bij) passing along each block, said strips being connected at a first end to one of the lines (Li + 1),
in the deposition of the stack, the hydrogenated amorphous silicon layer (16) and the insulant layer (18) are interrupted at the end of the line before the second metal layer, in such a way that the latter comes into contact with the first metal layer,
the second photoetching also forms connection strips (Gij) starting from a line (Li) and overlapping the second end of the conductive strip (Bij) and the appendix of the blocks, said second photoetching freeing the transparent conductive layer from the blocks and the median portion of the strips (Bij), each line thus having a transparent conductive layer end two superimposed metal layers in contact with one another at the end of the line.

**Patentansprüche**

1. Anzeige-Bildschirm mit aktiver Matrix, enthaltend eine erste Platte, auf er angeordnet sind,:

Leiterflecken (Pij), Steuertransistoren (Tij) mit einem Drain (D), einem Gate (G) und einer Source (S), und Adreßleitungen (Li), die dazu eingerichtet sind, mit einer Leitungssteuerschaltung (CCL) verbunden zu werden, wobei die Gates (G) der Transistoren (Tij) mit den Leitern (Li) und die Drains (D) mit den Flecken (Pij) verbunden sind, eine zweite Platte, die leitfähige Adreßspalten (Cj) aufweist, die die Flecken (Pij) der ersten Platte bedecken, und ein Flüssigkristall, das zwischen die zwei Platten eingefügt ist, wobei dieser Schirm durch die Tatsache gekennzeichnet ist, daß die Source (S) des einen Transistors (Tij), dessen Gate (G) mit einer Leitung (Li) der Ordnung (i) verbunden ist, mit der nachfolgenden Leiturg (Li + 1) der Ordnung (i + 1) über einen Widerstand (Rij) verbunden ist, der einen Wert hat, der sehr viel größer als die Ausgangsimpedanz der Leitungssteuerschaltungen (CCL) und sehr viel kleiner als der Widerstand der Transistoren (Tij) in Durchlaßbetrieb derselben ist.

2. Anzeige-Bildschirm nach Anspruch 1, dadurch gekennzeichnet, daß der Widerstand, der eine Source eines Transisotors mit einer Leitung verbindet, von einem leitfähigen Materialband (Bij) gebildet ist, das auf der ersten Platte angeordnet ist und sich längs eines Flecks erstreckt.

3. Anzeige-Bildschirm nach Anspruch 1, dadurch gekennzeichnet, daß die Flecken (Pij) und die Transistoren (Tij) symmetrisch jeweils zu zweit angeordnet sind, wobei zwei symmetrische Transistoren (Ti,j-1,Ti,j) eine gemeinsame Source haben, wobei ein einziges Leitungsband (Bi,j-1,j) diese gemeinsame Source mit der entsprechenden Leitung (Li + 1) verbindet und sich zwischen zwei symmetrischen Flecken erstreckt.

4. Bildschirm nach Anspruch 3, dadurch gekennzeichnet, daß den Transistoren (Ti,j-1 und Ti,j) die zwei symmetrischen Flecken zugeordnet sind, zwischen diesen zwei Flecken in ihrem mittleren Abschnitt angeordnet sind, wobei die Gates der zwei Transistoren mit der Leitung (Li) der Ordnung (i) über ein erstes Leiterband (Gij) verbunden sind, das sich zwischen den zwei Flecken erstreckt, und die gemeinsame Source dieser zwei Transistoren mit der Leitung (Li + 1) der Ordnung (i + 1) über ein zweites Band (Bij) verbunden ist, das sich zwischen den zwei Flecken erstreckt.

5. Verfahren zur Herstlelung enes Ahzeigebildschirms nach Anspruch 1, bei dem zur Erstellung der ersten Platte man die folgenden Schritte ausführt:

Abscheiden einer transparenten Leiterschicht (12) auf einem isolierenden Substrat (10),

erste Fotoätzung dieser ersten Schicht zur Ausbildung von Leiterflecken (Pij), die mit einem Fortsatz versehen sind,

Abscheiden eines Laminats aus einer wasserstoffangereicherten, amorphen Siliciumschicht (16), einer Isolierschicht (18) und einer Metallschicht (20),

zweite Fotoätzung, die an dem vorangehenden Laminat ausgeführt wird, um Leitungen auszubilden, die die Fortsätze der Transistoren überdecken, die in diesen Überdeckungszonen gebildet werden,

wobei dieses Verfahren dadurch gekennzeichnet ist, daß:

die erste Fotoätzung weiterhin die leitfähigen Bänder (Bij) ausbildet, die längs jedem Fleck und jedem Fortsatz verlaufen,

die zweite Fotoätzung die Leitungen ausbildet, die eines der Enden der leitfähigen Bänder überdecken,

man eine Metallschicht aufbringt und man eine dritte Fotoätzung an dieser Schicht ausführt, indem Leiterbrücken (Kij) zurückgelassen werden, die eine Verbindung zwischen dem anderen Ende der leitfähigen Bänder (Bij) und der benachbarten Leitung (Li + 1) herstellen.

6. Verfahren zum Herstellen eines Anzeigebildschirms nach Anspruch 1, bei dem man zur Ausbildung der ersten Platte die folgenden Schritte ausführt:

Aufbringen einer leitfähigen transparenten Schicht (12) auf einem isolierenden Substrat (10),

erste Fotoätzung, die Flecken (Pij) und Adreßleitungen (Li) definiert,

Aufbringen eines Laminats aus einer wasserstoffangereicherten amorphen Siliciumschicht (16), einer Isolierschicht (18) und einer zweiten Metallschicht (20),

zweite Fotoätzung dieses Laminats, die dieses Laminat auf den Leitungen und in Form zurückläßt,

wobei dieses Verfahren dadurch gekennzeichnet ist, daß:

nach Aufbringen der transparenten, leitfähigen Schicht (12) auf dem Substrat (10) man eine Schicht aus einem ersten Metall (13) aufbringt,

die zweite Fotoätzung weiterhin leitfähige Bänder (Bij) definiert, die längs jedem Fleck verlaufen, wobei diese Bänder mit einem ersten Ende an einer der Leitungen (Li + 1) verbunden sind,

in der Abscheidung des Laminats die wasserstoffangereicherte, amorphe Siliciumschicht (16) und die Isolierschicht (18) sich am Ende der Leitung vor der zweiten Metallschicht derart unterbrechen, daß diese mit der ersten Metallschicht in Berührung gelangt,

die zweite Fotoätzung weiterhin Verbindungsbänder (Gij) ausbildet, die eine Leitung (Li) teilt und das zweite Ende des leitfähigen Bandes (Bij) und den Fortsatz der Flecken überdeckt, wobei diese zweite Fotoätzung die transparente leitfähige Schicht von dem Flecken und dem mittleren Abschnitt der Bänder (Bij) löst, so daß jede Leitung eine leitfähige transparente Schicht und zwei übereinanderliegende Metallschichten enthält, die miteinander am Ende der Leitung in Berührung sind.

FIG. 1

FIG. 2a

FIG. 2b

FIG. 3

FIG. 4

FIG. 5

FIG. 6

13

FIG. 7

FIG. 11

14

FIG. 8

FIG. 9

FIG. 10